Europäisches Patentamt

European Patent Office

Office européen des brevets

(19)

(11) Veröffentlichungsnummer: **0 023 280**
**A1**

(12) # EUROPÄISCHE PATENTANMELDUNG

(21) Anmeldenummer: 80103752.4

(22) Anmeldetag: 02.07.80

(51) Int. Cl.³: **H 01 M 10/42**
**H 01 M 10/06**

(30) Priorität: 30.07.79 DE 2930871

(43) Veröffentlichungstag der Anmeldung:
04.02.81 Patentblatt 81/5

(84) Benannte Vertragsstaaten:
AT BE CH FR GB IT LI NL SE

(71) Anmelder: VARTA Batterie Aktiengesellschaft
Am Leineufer 51
D-3000 Hannover 21(DE)

(72) Erfinder: Knapp, Karl
Dierkskamp 10
D-3057 Neustadt/Ortsteil Metel(DE)

(72) Erfinder: Bauck, Uwe
Calenbergerstrasse 9
D-3008 Garbsen 1(DE)

(74) Vertreter: Kaiser, Dieter Ralf, Dipl.-Ing.
Gundelhardtstrasse 72
D-6233 Kelkheim Ts.(DE)

(54) Elektrischer Akkumulator.

(57) Ein elektrischer Akkumulator für die Stromversorgung von Kraftfahrzeugen mit einer Nennspannung von 12 V enthält sieben aus positiven und negativen Elektrodenplatten sowie aus Separatoren bestehende Plattenblöcke (1, 2, 3, 4, 5, 6, 7), von denen zwei Plattenblöcke (3, 4) über die Polbolzen (15, 16, 17, 18) mit Hilfe eines Schaltgerätes zueinander parallel oder in Serie umgeschaltet werden können. Tritt beim Betrieb des Anlassermotors ein erhöhter Leistungsbedarf auf, wird durch Serienschaltung aller sieben Zellen eine Spannung erzielt, die höher ist als die Klemmenspannung der üblichen sechszelligen Akkumulatoren. Nach der Entladung wird die Batterie durch Parallelschaltung von zwei der sieben Zellen (3, 4) wieder auf die Nennspannung einer sechszelligen Batterie zurückgeschaltet. Anschließend kann die Batterie geladen werden. Als Schaltgerät dient ein Batterieumschaltrelais.

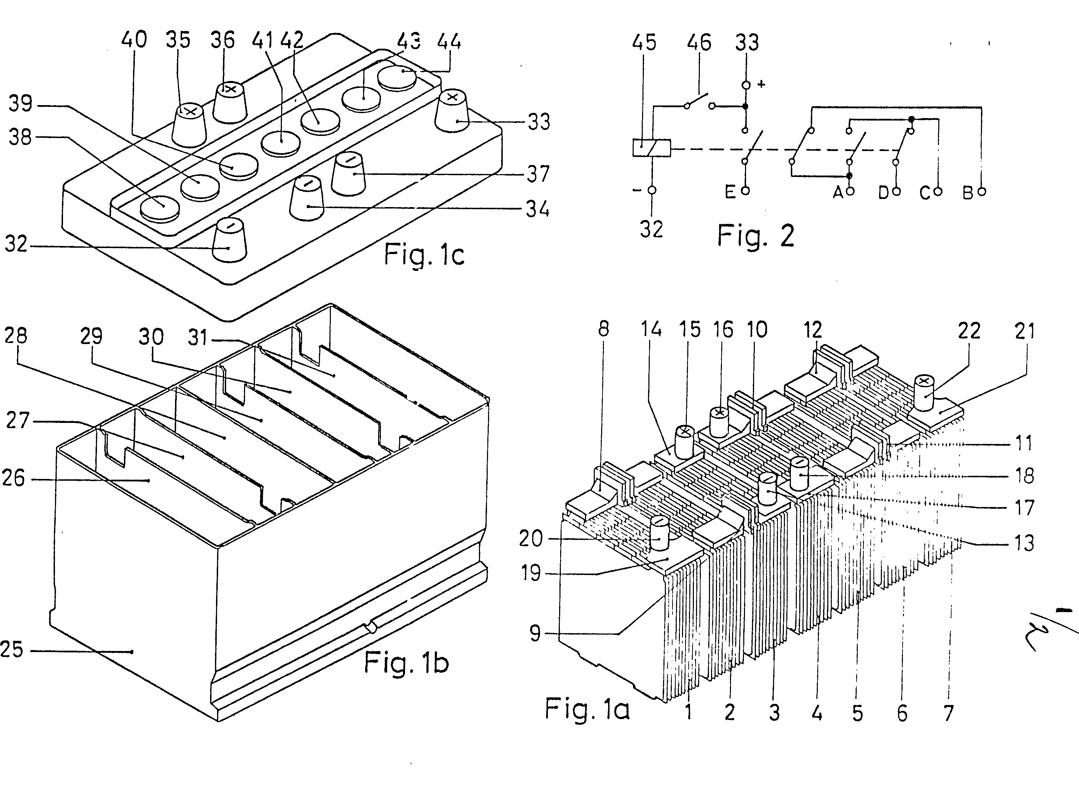

Zur Veröffentlichung ist die Figur 1a vorgesehen.

Fig. 1a

EP 0 023 280 A1

- 1 -

Reg.-Nr. HvP 99-DT                    6233 Kelkheim, den 13.06.1980
                                      EAP-Ga/sd


VARTA Batterie Aktiengesellschaft
3000 Hannover 21, Am Leineufer 51

Elektrischer Akkumulator

Die Erfindung betrifft einen elektrischen Akkumulator, insbesondere Bleiakkumulator für Kraftfahrzeugstromversorgung, mit mehreren in einem gemeinsamen Blockkasten angeordneten Einzelzellen, die positive und negative Elektrodenplatten sowie aus Separatoren bestehende Plattenblöcke enthalten.

Aus der DE-OS 27 11 708 ist es bekannt, zum Starten eines Kraftfahrzeuges neben einer Kraftfahrzeugbatterie eine zusätzliche Hilfsstromquelle einzusetzen. Als Hilfsstromquelle wird beispielsweise eine aufladbare Hilfsbatterie eingesetzt, die mit einer an die Fahrzeugbatterie anschließbaren Leitung verbunden ist; zwischen den Batterien ist ein Gleichrichter vorgesehen, der einen Stromfluß von der Fahrzeugbatterie zur Hilfsbatterie zuläßt, jedoch einen in Gegenrichtung fließenden Strom sperrt. Mit Hilfe einer solchen Anordnung soll bei Erschöpfung der Batterie, insbesondere bei Erschöpfung durch Kälte, ein Fahrzeugmotor ohne fremde Hilfe gestartet werden können.

Es erweist sich bei derartigen Maßnahmen als Nachteil, daß die Hilfsstromquellen neben einer gesonderten Unterbringung außerhalb des für die Starterbatterie vorgesehenen Raumes zusätzlich eine besondere elektrische Schaltungsanordnung zwecks Verbindung mit der Fahrzeugbatterie, dem Verbraucher und der Ladeeinrichtung benötigen.

Die Erfindung stellt sich die Aufgabe, eine Akkumulatorenbatterie zu bauen, die unter Verzicht auf zusätzliche Stromquellen eine zeitweilige Erhöhung der entnehmbaren Leistung zuläßt. Insbesondere soll bei Starterbatterien für Kraftfahrzeuge eine Erhöhung der Startleistung ohne nennenswerten Eingriff in die elektrische Fahrzeuganlage erzielt werden, wobei sowohl die Gehäuseabmessungen als auch die aktiven Massen gegenüber herkömmlichen Batterien gleicher Leistung reduziert werden können.

Die Aufgabe wird dadurch gelöst, daß wenigstens zwei Plattenblöcke zueinander parallel oder in Serie umschaltbar sind.

In einer bevorzugten Ausführungsform enthält ein Akkumulator mehrere Zellen, von denen zwei während des Ladebetriebs zueinander parallel geschaltet sind. Bei erhöhter Belastung der Batterie, zum Beispiel beim Startvorgang, wird die Parallelschaltung aufgehoben, so daß eine Serienschaltung aller Zellen vorliegt.

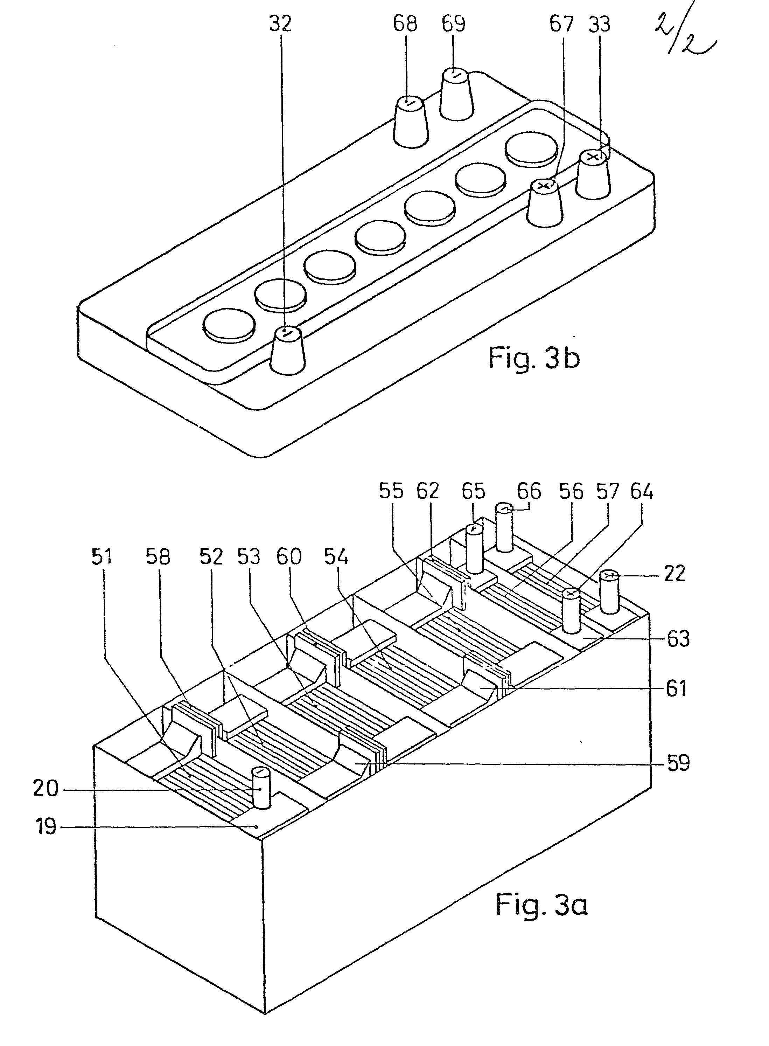

Im folgenden ist der Gegenstand anhand der Figuren 1 und 2 näher erläutert. Figur 1 zeigt in Ausschnitten einen siebenzelligen Bleiakkumulator mit einer Nennspannung von 12 V zur Stromversorgung von Kraftfahrzeugen. In Figur 2 ist ein Schaltgerät für die siebenzellige Batterie dargestellt. Figur 3 zeigt eine siebenzellige Batterie mit zwei umschaltbaren Zellen, von denen eine ständig mit einem Endpol verbunden ist.

Gemäß Figur 1a enthält der Akkumulator sieben Plattenblöcke, welche in durch Zellentrennwände voneinander abgetrennten Zellkammern untergebracht sind. Die Plattenblöcke 1, 2 und 3 sind durch Zwischenzellenverbinder 8 und 9 in Serie geschaltet. In gleicher Weise sind die Plattenblöcke 4, 5, 6 und 7 durch die Zellenverbinder 10, 11 und 12 in einer Serienschaltung miteinander verbunden. Zwischen den Plattenblöcken 3 und 4 besteht jedoch keine ständige elektrische Verbindung. Die negativen Elektroden des Plattenblocks 3 sind durch Zellenverbinder 9 zusammengefaßt. Auf dem Zellenverbinder befindet sich zur Stromableitung Polbolzen 13.

- 3 -

Die positiven Elektroden des Plattenblocks 3 sind durch Polbrücke 14 zusammengefaßt. Diese Polbrücke enthält zur Stromableitung Polbolzen 15. Entsprechend dient Zellenverbinder 10 zur Stromableitung der positiven Elektroden des Plattenblocks 4. Dieser Zellenverbinder ist mit Polbolzen 16 versehen. Zur Stromableitung der negativen Elektroden des Plattenblocks 4 dient Polbrücke 17, welche mit Polbolzen 18 verbunden ist. Die negativen Platten des Plattenblocks 1 sind über Polbrücke 19 mit dem negativen Endpol 20 verbunden. Entsprechend sind die durch Polbrücke 21 zusammengefaßten positiven Elektroden des Plattenblocks 7 mit dem positiven Endpol 22 verbunden. Die Zahl der Elektrodenplatten in den Plattenblöcken 3 und 4 kann gegenüber der Plattenzahl der übrigen Plattenblöcke reduziert sein. Die Plattenblöcke 3 und 4 können beispielsweise jeweils drei negative und zwei positive Elektrodenplatten enthalten. Es ist jedoch auch möglich, in den Plattenblöcken 3 und 4 die gleiche Anzahl von negativen und von positiven Elektrodenplatten einzusetzen.

Das in Figur 1b dargestellte Gehäuse dient zur Aufnahme der in Figur 1a dargestellten Plattenblöcke 1 bis 7. Die zur Aufnahme der Plattenblöcke vorgesehenen Zellgefäße werden durch die Außenwände und den Boden des Gehäuses 25 sowie durch die im Gehäuseinnern befindlichen Zellentrennwände 26, 27, 28, 29, 30 und 31 gebildet. Die Zellenverbinder 8 und 9 werden dabei durch Aussparungen in den Zellentrennwänden 26 und 27 geführt. Die Durchführungsöffnungen werden nach der Montage durch Kunststoffumspritzungen abgedichtet. Die zwischen den Zellenblöcken 3 und 4 befindliche Trennwnad 28 besitzt keine Aussparung, da die elektrischen Stromableiter 13, 15, 16 und 18 dieser Zellen nach oben abgeführt sind. Die in den Zellentrennwänden 29, 30 und 31 befindlichen Aussparungen dienen zur Durchführung der Zellenverbinder 10, 11 und 12.

Zum Abschluß des Gehäuses dient der in Figur 1c dargestellte Gehäusedeckel mit den elektrischen Anschlüssen und Elektrolyteinfüllöffnungen. Die Bleibuchsen 32 und 33 sind mit den Polbolzen 20 und 22 verbunden; sie bilden den negativen und den positiven Endpol.

- 4 -

Die aus dem Plattenblock 3 herausgeführten Polbolzen 13 und 15 sind mit den im Deckel befindlichen Bleibuchsen 34 und 35 elektrisch und mechanisch verbunden. Die zum Plattenblock 4 gehörenden Polbolzen 16 und 18 sind entsprechend mit den Bleibuchsen 36 und 37 verbunden. Es ist auch möglich, an Stelle der Bleibuchsen 34, 35, 36, 37 in den Gehäusedeckel eingelassene Kontaktflächen aus Blei vorzusehen, die mit den Polbolzen 13, 15, 16 und 18 verbunden sind. Die Einfüllöffnungen der einzelnen Zellen werden durch die Verschlußstopfen 38, 39, 40 41, 42, 43, 44 verschlossen.

Nach Einsetzen des Plattenblocks werden Gehäuse und Gehäusedeckel durch Verschweißen fest miteinander verbunden und die Zellenräume gegeneinander abgedichtet. Ebenfalls werden die Polbolzen mit den im Deckel befindlichen Polbuchsen elektrisch und mechanisch verbunden.

Die elektrische Verbindung zwischen den Plattenblöcken 3 und 4 wird gemäß Figur 2 durch ein elektromagnetisches Batterieumschaltrelais vorgenommen. Das Umschaltrelais enthält eine Erregerspule 45, die zusammen mit einem Startschalter 46 eine zwischen dem positiven und negativen Endpol 33, 32 angeschlossene Reihenschaltung bildet. Solange Schalter 46 geöffnet ist, besteht eine elektrische Verbindung zwischen dem mit Polbolzen 15 verbundenen Relaisanschluß A und dem mit Polbolzen 16 verbundenen Relaisanschluß B. Entsprechend ist Polbolzen 13 über Anschlußkontakt D und Anschlußkontakt C mit Polbolzen 18 verbunden. Es liegt somit bei geöffnetem Schalter 46 eine Parallelschaltung der positiven und negativen Elektrodenplatten der Plattenblöcke 3 und 4 vor. Durch Betätigung des Schalters 46 wird die Relaiswicklung 45 erregt, so daß die elektrischen Verbindungen zwischen A und B sowie zwischen C und D aufgetrennt werden. Die Parallelschaltung der Plattenblöcke 3 und 4 ist damit aufgehoben. Durch Umschaltung entsteht eine neue Verbindung zwischen A und C, wodurch die Polbolzen 15 und 18 miteinander verbunden werden. Es liegt somit eine elektrische Reihenschaltung aller sieben Zellenblöcke vor. Zusätzlich wird zur Betätigung des Anlassermotors Relaiskontakt E mit der positiven Klemme der Batterie verbunden.

Es ist somit möglich, während des Startvorgangs durch Serienschaltung der Plattenblöcke 3 und 4 eine Erhöhung der Klemmenspannung und somit der entnehmbaren Leistung zu erwirken. Nach dem Startvorgang werden die Plattenblöcke 3 und 4 wieder parallel geschaltet, so daß an den Akkumulatorklemmen wieder die Nennspannung anliegt. Zweckmäßigerweise dient das in Figur 2 dargestellte Batterieumschaltrelais gleichzeitig als Anlaßschalter. Es ist jedoch auch möglich, über Kontakt E seinen konventionellen Anlaßschalter zu betätigen. Die elektrische und mechanische Verbindung zwischen dem Batterieumschalter gemäß Figur 2 und der Batterie wird zweckmäßigerweise durch Verschraubung der Relaisanschlüsse A, B, C und D mit den Polbolzen 34, 35, 36, 37 durchgeführt. Weiterhin sind jeweils ein Anschluß an die Endpole 32, 33 sowie ein Anschluß zum Anlaßschalter sowie zum Anlasser erforderlich. Es ist jedoch auch möglich, mit Hilfe einer Klemmvorrichtung die Relaisanschlüsse A, B, C und D mit im Deckel eingelassenen Kontaktflächen zu verbinden, wobei die Kontaktflächen an die Polbolzen 13, 15, 16, 18 angeschlossen sind. Dabei werden die aus Kupfer oder Messing bestehenden Relaiskontakte in die aus Blei bestehenden Kontaktflächen des Deckels eingepreßt. Es ist weiterhin möglich, die Kontaktflächen mit einem Gewinde zur Aufnahme von Anschlußbolzen zu versehen, die über elektrische Leitungen mit einem separaten Schaltgehäuse zu verbinden sind. Während des Betriebes mit erhöhter Batteriespannung treten keine besonderen Probleme auf, da eine übliche Fahrzeuglichtmaschine mit ca. 14,5 V ohnehin Spannungen erzeugt, die höher sind als die Nennspannung der Batterie. Schädigungen der angeschlossenen Verbraucher während der Entladung sind somit nicht zu erwarten. Nach dem Startvorgang wird die Batterie wieder auf ihre Nennspannung zurückgeschaltet. Anschließend kann sie durch eine übliche Lichtmaschine aufgeladen werden.

Figur 3a stellt eine siebenzellige Bleibatterie mit einer Nennspan-

- 6 -

nung von 12 V zur Stromversorgung von Kraftfahrzeugen dar. Die Zellen 51, 52, 53, 54 und 55 besitzen die in Starterbatterien üblichen Plattenblöcke von beispielsweise vier positiven und fünf negativen Elektrodenplatten, die jeweils über Plattenfahnen miteinander parallel geschaltet sind. Die Plattenblöcke in den Zellen 51 bis 55 sind durch die in Akkumulatorenbatterien übliche Reihenschaltung über Zellenverbinder 58, 59, 60, 61 fest miteinander verbunden. Die negativen Plattenfahnen des Plattenblocks 51 sind über eine Polbrücke 19 mit dem negativen Endpol 20 verbunden.

Die positiven Platten des Plattenblocks 55 sind über Zellenverbinder 62 an die negativen Platten des Plattenblocks 56 angeschlossen. Die positiven Platten dieses Plattenblocks sind über die Polbrücke 63 mit Polbolzen 64 zusammengefaßt. Plattenblock 56 besitzt ebenso wie der benachbarte, mit dem positiven Endpol 22 verbundene Plattenblock 57 eine reduzierte Anzahl von Platten. Die positiven Elektrodensätze der Plattenblöcke 56, 57 bestehen beispielsweise aus jeweils zwei Elektrodenplatten, die negativen Elektroden zum Beispiels aus jeweils drei Elektrodenplatten. Es ist jedoch auch möglich, die Plattenblöcke 56, 57 mit einer gleichen Anzahl von Elektrodenplatten für beide Polaritäten einzusetzen. Dabei werden vorzugsweise drei positive und drei negative Elektrodenplatten pro Plattenblock eingesetzt. Zur Entladung werden die Plattenblöcke elektrisch in Reihe geschaltet, so daß die positiven Platten des Blocks 56 über die Polbolzen 64 und 66 mit.den negativen Platten des Plattenblocks 57 verbunden sind. Im Ladebetrieb sind dagegen die positiven und die negativen Platten der Blöcke 56 und 57 jeweils parallel zueinander geschaltet, so daß Polbolzen 64 mit dem Endpol 22 verbunden ist und der mit dem Zellenverbinder 62 verbundene Polbolzen 65 mit Polbolzen 66 zusammengeschaltet ist.

Zur Abdeckung des Batteriegehäuses ist der in Figur 36 dargestellte Deckel vorgesehen. Die Endpolbolzen 20 und 22 sind mit den Anschlußpolen 32 und 33 verbunden. Die Polbolzen 64, 65 und 66 sind an die im Deckel befindlichen Polbuchsen 67, 68 und 69 ange-

- 7 -

schlossen. Es ist jedoch auch möglich, an Stelle der Polbuchsen 67, 68, 69 in den Deckel eingelassene Kontaktflächen aus Blei einzusetzen.

Die Umschaltung von der Nennspannung auf erhöhte Betriebsspannung wird wiederum durch das in Figur 2 beschriebene Batterieumschaltrelais vorgenommen. Dabei sind die Kontakte A und B mit Polbolzen 67 und Endpol 33 verbunden. Die Relaiskontakte C und D sind mit Polbolzen 69 und 68 verbunden.

In einer weiteren vorteilhaften Ausgestaltung besteht der Akkumulator aus mehreren Plattenblockpaaren, die während des üblichen Betriebs parallel geschaltet sind, jedoch zur Erhöhung der Startleistung in Serie geschaltet werden können. Die Umschaltung mehrerer Plattenblockpaare von Parallelschaltung in Serienschal- tung erfolgt dabei in Abhängigkeit von der im Belastungsfall ge- messenen Klemmenspannung. Mit Hilfe eines Schaltgerätes ist es möglich, an Stelle der sechs Zellen einer 12 V-Starterbatterie bis zu zwölf Zellen einzusetzen, wobei jeweils zwei Zellen zueinander parallel bzw. in Serie zu schalten sind. Eine solche Batterie besitzt keine durch die Zellentrennwände geführten Zellenverbinder mehr. Die elektrischen Verbindungen zwischen den Zellen werden durch auf den Polbrücken der Plattenblöcke angeordnete Polbolzen über ein angeschlossenes Schaltgerät hergestellt.

Es ist weiterhin möglich, den Batterieumschalter über Sensoren anzusteuern, die sich in der Batterie befinden. Vorzugsweise wird ein Sensor eingesetzt, welcher den Batterieumschalter in Abhängigkeit von der Richtung des im Akkumulator fließenden Stroms ansteuert. Solange ein Entladestrom fließt, sind die umschaltbaren Plattenblöcke in Serie geschaltet. Bei Zufuhr eines Ladestroms wird dagegen eine Parallelschaltung der Plattenblöcke vorgenommen. Es steht somit während des Entladevorgangs stets eine gegenüber der Nennspannung erhöhte Klemmenspannung zur Verfügung, welche auch zu einer erhöhten Leistungsabgabe führt.

Patentansprüche

1. Elektrischer Akkumulator, insbesondere Bleiakkumulator für Kraftfahrzeugstromversorgung, mit mehreren in einem gemeinsamen Blockkasten angeordneten Einzelzellen, die positive und negative Elektrodenplatten sowie aus Separatoren bestehende Plattenblöcke enthalten, dadurch gekennzeichnet, daß wenigstens zwei Plattenblöcke (3, 4, 56, 57) zueinander parallel oder in Serie umschaltbar sind.

2. Akkumulator nach Anspruch 1, dadurch gekennzeichnet, daß die Polbrücken von zwei Plattenblöcken (3, 4, 56, 57) mit in den Deckel eingelassenen Kontaktflächen verbunden sind.

3. Akkumulator nach Anspruch 2, dadurch gekennzeichnet, daß oberhalb des Deckels ein Schaltgehäuse angeordnet ist, welches Kontakte enthält, die auf im Deckel befindliche Kontaktflächen aufsetzbar sind.

4. Akkumulator nach Anspruch 2 oder 3, dadurch gekennzeichnet, daß Schaltgehäuse und Deckel durch Verspannung elektrisch und mechanisch miteinander verbunden sind.

5. Akkumulator nach Anspruch 2 oder 3, dadurch gekennzeichnet, daß die Kontaktflächen im Deckel mit Gewinden versehen sind, in welche Anschlußbolzen einschraubbar sind.

6. Akkumulator nach Anspruch 1, dadurch gekennzeichnet, daß neben den Endpolen (32, 33) die Polbrücken von zwei Plattenblöcken (3, 4, 56, 57) über Polbolzen (13, 15, 16, 18, 64, 65, 66) mit durch den Deckel geführten Polbuchsen (34, 35, 36, 37, 67, 68, 69) verbunden sind.

- 9 -

7. Akkumulator nach Anspruch 5 oder 6, dadurch gekennzeichnet, daß die Anschlußbolzer oder die Polbuchsen (34, 35, 36, 37, 67, 68, 69) an ein Schaltgehäuse anschließbar sind.

8. Akkumulator nach Anspruch 7, dadurch gekennzeichnet, daß das Schaltgehäuse auf das Akkumulatorgehäuse aufsetzbar ist.

Fig. 1c

Fig. 2

Fig. 1b

Fig. 1a

0023280

32    68    69         67    33

Fig. 3b

55  62    65      66    56  57  64

51    58    52  53    60    54

22

63

61

59

20

19

Fig. 3a

| | Europäisches Patentamt | EUROPÄISCHER RECHERCHENBERICHT | | Nummer der Anmeldung<br>EP 80 10 3752 |
|---|---|---|---|---|

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 1 924 959 (LUTHER M. PATTERSON)<br>* Seite 1, Zeilen 28-120; Seite 2; Seite 3, Zeilen 1-26; Ansprüche * | 1-3, 6-8 |
| X | GB - A - 269 633 (HAYDN THIES HARRISON)<br>* Seite 1, Zeilen 39-75; Seite 2, Zeilen 31-130; Seite 3, Zeilen 1-58; Ansprüche * | 1 |
| | BE - A - 439 977 (BARRE)<br>* Seite 4, Zeile 11 bis Ende; Seite 5 * | 1 |
| | CH - A - 474 869 (ARMIN GRAF)<br>* Spalte 1, Zeilen 32-40; Spalte 2, Zeilen 1-23 * | 1 |
| A | FR - A - 2 114 888 (TRANSELEKTRO MAGYAR VILLAMOSSAGI KULKERESKEDELMI VALLALAT) | |
| A | US - A - 3 105 909 (GRAFTON V. JONES) | |
| A | FR - A - 630 372 (M. CHARLES) | |
| A | FR - A - 746 965 (SOCIETE ANONYME DES PILES ET ACCUMULATEURS ELER) | |

**KLASSIFIKATION DER ANMELDUNG (Int Cl³)**

H 01 M 10/42
10/06

**RECHERCHIERTE SACHGEBIETE (Int. Cl.³)**

H 01 M 10/42
10/06
10/12
10/04
2/20

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort<br>Den Haag | Abschlußdatum der Recherche<br>06-11-1980 | Prüfer<br>DE VOS |
|---|---|---|

EPA form 1503.1  06.78